(19) Europäisches Patentamt
European Patent Office
Office européen des brevets

(11) **EP 3 718 735 A1**

(12) **EUROPÄISCHE PATENTANMELDUNG**

(43) Veröffentlichungstag:
**07.10.2020 Patentblatt 2020/41**

(51) Int Cl.:
**B29C 48/285** (2019.01)   **B29C 48/375** (2019.01)
**B29C 48/92** (2019.01)   **B29B 7/42** (2006.01)
**B29B 7/72** (2006.01)   **B29B 7/74** (2006.01)

(21) Anmeldenummer: **20163468.0**

(22) Anmeldetag: **17.03.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **03.04.2019 DE 102019204772**

(71) Anmelder: **Continental Reifen Deutschland GmbH 30165 Hannover (DE)**

(72) Erfinder:
• **Sharifi, Monir**
  **30419 Hannover (DE)**
• **Steiner, Frank Stefan**
  **30419 Hannover (DE)**

(74) Vertreter: **Finger, Karsten**
  **Continental Aktiengesellschaft**
  **Patente und Lizenzen**
  **Postfach 169**
  **30001 Hannover (DE)**

(54) **VORRICHTUNG ZUR EXTRUSION VON SCHWEFELVERNETZBAREN KAUTSCHUKMISCHUNGEN, VERWENDUNG DER VORRICHTUNG UND VERFAHREN ZUM HERSTELLEN EINER EXTRUDIERTEN, SCHWEFELVERNETZBAREN KAUTSCHUKMISCHUNG**

(57) Die Erfindung betrifft eine Vorrichtung zur Extrusion von schwefelvernetzbaren Kautschukmischungen, umfassend mindestens eine Plastifizierungseinheit zum Plastifizieren der hergestellten schwefelvernetzbaren Kautschukmischungen, mindestens eine der Plastifizierungseinheit nachgeschalteten Zuführeinheit zum Zuführen von Kautschukmischungen in eine Extrusionseinheit, mindestens eine der Zuführeinheit nachgeschalteten Extrusionseinheit und mindestens eine Sensoreinheit zum Ermitteln des Ist-Metergewichts einer mittels der Extrusionseinheit extrudierten Kautschukmischung, dadurch gekennzeichnet, dass die Vorrichtung zusätzlich eine Regelungseinheit, die ausgebildet ist, den Energieeintrag in die Plastifizierungseinheit in Abhängigkeit des Metergewichts der mittels der Extrusionseinheit extrudierten Kautschukmischung zu regeln. Die Erfindung betrifft auch ein Verfahren zum Herstellen einer extrudierten, schwefelvernetzbaren Kautschukmischung sowie Verwendung der Vorrichtung zum Senken der Schwankungen des Metergewichts von extrudierten, schwefelvernetzbaren Kautschukmi schungen.

Figur 4

EP 3 718 735 A1

**Beschreibung**

Die Erfindung betrifft eine Vorrichtung zur Extrusion von schwefelvernetzbaren Kautschukmischungen. Die Erfindung betrifft auch ein Verfahren zum Herstellen einer extrudierten, schwefelvernetzbaren Kautschukmischung sowie Verwendung der Vorrichtung zum Senken der Schwankungen des Metergewichts von extrudierten, schwefelvernetzbaren Kautschukmischungen.

Aufgrund der momentanen Entwicklungen in der Kautschukindustrie, insbesondere bei der Reifenherstellung, die Herstellungsprozesse vollständig zu automatisieren, wachsen die Qualitätsanforderungen an das jeweilige Kautschukprodukt ständig. Insbesondere von Bedeutung sind das Gewicht und geometrischen Maße der extrudierten Kautschukmischung, welche häufig in Form eines Endlos-Streifens vorliegt. Abweichungen oder zu große Schwankungen beim Gewicht oder den vorstehend beschriebenen Maßen der extrudierten Kautschukmischung führen häufig dazu, dass ein großer Teil der Kautschukmischung weggeworfen werden muss und somit die Umwelt unnötig belastet.

Eine primäre Aufgabe, die der Erfindung zugrunde liegt, besteht daher darin, ein Verfahren zum Herstellen einer plastifizierten, schwefelvernetzbaren Kautschukmischung und eine Vorrichtung zur Extrusion von schwefelvernetzbaren Kautschukmischungen bereitzustellen, welche die vorstehend beschriebenen bekannten Nachteile nicht aufweist. Insbesondere war es eine Aufgabe, Kautschukmischungen zu extrudieren, sodass sich ihr vorbestimmtes Gewicht oder ihre vorbestimmten Maße genauer einstellen lassen.

Gelöst wird diese Aufgabe erfindungsgemäß durch eine Vorrichtung zur Extrusion von schwefelvernetzbaren Kautschukmischungen, umfassend

- mindestens eine Plastifizierungseinheit zum Plastifizieren der hergestellten schwefelvernetzbaren Kautschukmischungen,
- mindestens eine der Plastifizierungseinheit nachgeschalteten Zuführeinheit zum Zuführen von Kautschukmischungen in eine Extrusionseinheit,
- mindestens eine der Zuführeinheit nachgeschalteten Extrusionseinheit und
- mindestens eine Sensoreinheit zum Ermitteln des Ist-Metergewichts einer mittels der Extrusionseinheit extrudierten Kautschukmischung,

dadurch gekennzeichnet, dass die Vorrichtung zusätzlich

eine Regelungseinheit umfasst, die ausgebildet ist, den Energieeintrag in die Plastifizierungseinheit in Abhängigkeit des Metergewichts und/oder der Metergewichtsschwankungen der mittels der Extrusionseinheit extrudierten Kautschukmischung zu regeln.

Überraschenderweise wurde festgestellt, dass durch das geschickte Variieren des Energieeintrages in die Plastifizierungseinheit die Schwankungen des Gewichts oder der ab Maße der extrudierten Kautschukmischung verringert werden können. Je langsamer die Kautschukmischung beispielsweise zur Plastifizierungseinheit hinzugefügt wird oder je niedriger die Drehgeschwindigkeit beispielsweise desto höher sind die Schwankungen. Im Rahmen der vorliegenden Erfindung ist unter dem Variieren oder dem Regeln des Energieeintrages ist insbesondere das Variieren oder Regeln des Druckes in der Plastifizierungseinheit und/oder der Drehgeschwindigkeit des Mischwerkzeuges der Plastifizierungseinheit und/oder der Dauer des Plastifizierens gemeint.

Zusätzlich können die Abweichungen der geometrischen Maße vom anvisierten Querschnitt des Kautschukprofils reduziert werden können. Zur Einstellung besonderer geometrischer Maße umfasst eine in der Kautschukindustrie übliche Extrusionseinheit eine Ausformkomponente, beispielsweise eine Endschablone, welche die extrudierte Kautschukmischung in die gewünschte geometrische Form mit den entsprechend geometrischen Maßen ausformt. Im Rahmen der vorliegenden Erfindung umfasst daher standardgemäß eine Extrusionseinheit eine vorstehend beschriebene Ausformkomponente.

Im Rahmen der vorliegenden Erfindung umfasst der Ausdruck "Plastifizierungseinheit" bevorzugt eine Einheit zum Mischen, Walzen oder Extrudieren von Kautschukmischungen, wobei die Plastifizierungseinheit besonders bevorzugt dazu geeignet ist, die Mooney-Viskosität der Kautschukmischung beim Plastifizieren zu senken und eine homogene Mischungstemperatur zu erreichen.

Ein Beispiel einer Sensoreinheit zum Ermitteln des Ist-Metergewichts einer mittels der Extrusionseinheit extrudierten Kautschukmischung ist eine Metergewichtswaage, beispielsweise das Produkt Metergewichtswaage der Firma Kestermann. Die Messgenauigkeit solcher Waagen liegt bei 1 g/m.

Ein Beispiel einer Extrusionseinheit mit einer Extruderschnecke ist ein Kaltfütterextruder. Ein Kaltfütterextruder kann mit verschiedenen Extruderdüsen verwendet werden.

Ein Beispiel für Transportmittel ist ein Transportband und ein Beispiel für ein Kühlmittel ist beispielsweise eine Sprühkühlung, welche mit Hilfe eines flüssigen Sprühmittels wie Wasser die plastifizierte Kautschukmischung abkühlt. Besonders bevorzugt umfasst die Zuführeinheit jedoch einen Speicher für Kautschukmischungen wie beispielsweise einen Kammspeicher oder einen Festooner.

Bevorzugt ist eine Vorrichtung wie vorstehend beschrieben oder wie vorstehend als bevorzugt beschrieben, wobei die Plastifizierungseinheit ein Mischwerkzeug aufweist oder einen Mischer mit einem Mischrotor als Mischwerkzeug, eine Zahnradpumpe mit einem Zahnrad als Mischwerkzeug, ein Walzwerk oder eine Extrusionseinheit mit einer oder mehreren Extruderschnecke aufweist, wobei die Plastifizierungseinheit bevorzugt eine Zahnradpumpe, ein Walzwerk oder eine Extrusionseinheit mit einer oder mehreren Extruderschnecke aufweist, besonders bevorzugt eine Extrusionseinheit mit einer oder mehreren Extruderschnecke und einer Extruderdüse ist.

Bevorzugt ist eine erfindungsgemäße Vorrichtung wie vorstehend beschrieben oder wie vorstehend als bevorzugt beschrieben, wobei die Extrusionseinheit Messsensoren umfasst, wobei einer oder mehrere der Messsensoren dazu ausgebildet und angeordnet ist, die Temperatur, den Druck in der Plastifizierungseinheit, insbesondere in einem Extruderkopf eines Extruders als Plastifizierungseinheit, und/oder der Extrusionseinheit, insbesondere in einem Extruderkopf eines Extruders als Extrudereinheit, zu ermitteln.

Ein Vorteil des vorstehend beschriebenen Aspekts der vorliegenden Erfindung ist, dass durch die Bewachung der vorstehenden Eigenschaften der Kautschukmischung sichergestellt werden kann, dass bestimmte Grenzwerte, wie beispielsweise 150 °C oder 200 bar, in der Plastifizierungseinheit nicht überschritten werden. Dies ermöglicht ein schnelleres Einstellen der optimalen Parameter für eine möglichst geringe Schwankung der des Gewichts oder der Maße der extrudierten Kautschukmischung. Gleichzeitig können die Messwerte für eine bestimmte Zusammensetzung einer Kautschukmischung gespeichert werden, umso beim erneuten Anfahren mit dieser Kautschukmischung die entsprechenden Parameter wieder schneller einzustellen.

Bevorzugt ist eine erfindungsgemäße Vorrichtung wie vorstehend beschrieben oder wie vorstehend als bevorzugt beschrieben, wobei die Vorrichtung einen Mischer zum Herstellen von schwefelvernetzbaren Kautschukmischungen aufweist, welcher der Plastifizierungseinheit vorgeschaltet ist.

Ein Vorteil des vorstehend beschriebenen Aspekts der vorliegenden Erfindung ist, dass insbesondere frisch angemischten Kautschukmischungen zu extrudierten Kautschukmischungen mit besonders geringen Schwankungen führen, da beispielsweise noch keine nachteiligen Effekte aufgrund einer Lagerung vorliegen.

Bevorzugt ist eine erfindungsgemäße Vorrichtung wie vorstehend beschrieben oder wie vorstehend als bevorzugt beschrieben, wobei

- die Plastifizierungseinheit eine Zahnradpumpe, ein Walzwerk oder ein Extruder mit einer oder mehreren Extruderschnecke aufweist
  und/oder
- wobei die Zuführeinheit Transportmittel, insbesondere ein oder mehrere Förderbänder, und optional einen Speicher für Kautschukmischungen und/oder Kühlmittel, wobei die Zuführeinheit bevorzugt aus einem oder mehreren Förderbändern besteht.

Bevorzugt ist eine erfindungsgemäße Vorrichtung wie vorstehend beschrieben oder wie vorstehend als bevorzugt beschrieben, wobei die Plastifizierungseinheit ein Extruder mit mindestens einer Extruderschnecke ist und die Regelungseinheit ausgebildet ist, anstelle des Energieeintrages die Drehzahl der einen oder der mindestens einen Extruderschnecke des Extruders in Abhängigkeit des Metergewichts und/oder der Metergewichtsschwankungen der mittels der Extrusionseinheit extrudierten Kautschukmischung zu regeln.

Ein Vorteil des vorstehend beschriebenen Aspekts der vorliegenden Erfindung ist, dass insbesondere über die Drehzahl der Plastifizierungseinheit die Temperatur und der Druck der zu extrudierten Kautschukmischung eingestellt werden kann, wodurch sich noch vorteilhafter die Variation des Metergewichts und/oder der Metergewichtsschwankungen der extrudierten Kautschukmischung reduzieren lassen.

Bevorzugt ist eine erfindungsgemäße Vorrichtung wie vorstehend beschrieben oder wie vorstehend als bevorzugt beschrieben, wobei die Regelungseinheit ferner ausgebildet ist,

a. die Drehzahl der Schnecken, Zahnräder oder Walzen der Plastifizierungseinheit
und/oder
b. der in die Plastifizierungseinheit zugeführten Menge an Kautschukmischung pro Zeiteinheit,
und/oder c. der Zufuhrgeschwindigkeit der Zuführeinheit in die Extrudereinheit,

in Abhängigkeit des Metergewichts und/oder der Metergewichtsschwankungen der mittels des Extruders extrudierten Kautschukmischung zu regeln.

Ein Vorteil des vorstehend beschriebenen Aspekts der vorliegenden Erfindung ist, dass diese Parameter die Variation des Metergewichts oder der ab Maße der extrudierten Kautschukmischung noch weiter senken, insbesondere in Kombination miteinander.

In besonders hohem Maße bevorzugt ist eine Vorrichtung wie vorstehend beschrieben umfassend

- mindestens eine Plastifizierungseinheit zum Plastifizieren der hergestellten schwefelvernetzbaren Kautschukmischungen,
- mindestens eine der Plastifizierungseinheit nachgeschalteten Zuführeinheit zum Zuführen von Kautschukmischungen in eine Extrusionseinheit,
- mindestens eine der Zuführeinheit nachgeschalteten Extrusionseinheit
und
- mindestens eine Sensoreinheit zum Ermitteln des Ist-Metergewichts einer mittels der Extrusionseinheit extrudierten Kautschukmischung,
dadurch gekennzeichnet, dass die Vorrichtung zusätzlich
eine Regelungseinheit, die ausgebildet ist, den Energieeintrag in die Plastifizierungseinheit in Abhängigkeit der Metergewichtsschwankungen der mittels der Extrusionseinheit extrudierten Kautschukmischung zu regeln, wobei

- die Plastifizierungseinheit eine Extrusionseinheit mit einer Extruderschnecke und einer Extruderdüse aufweist,
- die Zuführeinheit Messsensoren umfasst, wobei einer oder mehrere der Messsensoren dazu geeignet ist, die Temperatur und den Druck der Kautschukmischung in der Zuführeinheit zu ermitteln,
- die Vorrichtung zusätzlich Mittel zur Regelung der Drehgeschwindigkeit der einen Extruderschnecke der Plastifizierungseinheit aufweist
und optional
- die Zuführeinheit einen Speicher für Kautschukmischungen aufweist.

Die vorstehend beschriebenen vorteilhaften Aspekte einer erfindungsgemäßen Vorrichtung zur Extrusion von schwefelvernetzbaren Kautschukmischungen gelten auch für sämtliche Aspekte nachstehend beschriebener Verwendungen und die nachstehend diskutierten vorteilhaften Aspekte erfindungsgemäßer Verwendungen gelten entsprechend für sämtliche Aspekte einer erfindungsgemäßen Vorrichtung zur Extrusion von schwefelvernetzbaren Kautschukmischungen.
Die Erfindung betrifft auch die Verwendung einer Vorrichtung wie vorstehend beschrieben oder wie vorstehend als bevorzugt beschrieben zum Senken der Schwankungen des Metergewichts von extrudierten, schwefelvernetzbaren Kautschukmischungen.
Die vorstehend beschriebenen vorteilhaften Aspekte einer erfindungsgemäßen Vorrichtung zur Extrusion von schwefelvernetzbaren Kautschukmischungen und erfindungsgemäße Verwendungen gelten auch für sämtliche Aspekte eines nachstehend beschriebenen Verfahrens und die nachstehend diskutierten vorteilhaften Aspekte erfindungsgemäßer Verfahren gelten entsprechend für sämtliche Aspekte einer erfindungsgemäßen Vorrichtung zur Extrusion von schwefelvernetzbaren Kautschukmischungen und erfindungsgemäße Verwendungen.
Die Erfindung betrifft auch ein Verfahren zum Herstellen einer extrudierten, schwefelvernetzbaren Kautschukmischung, umfassend die folgenden Verfahrensschritte:

a. Herstellen einer schwefelvernetzbaren Kautschukmischung mittels eines Mischers oder Bereitstellen einer schwefelvernetzbaren Kautschukmischung,
b. Plastifizieren der in Schritt a. hergestellten oder bereitgestellten schwefelvernetzbaren Kautschukmischung in einer Plastifizierungseinheit,
c. Messen der Temperatur der Kautschukmischung in einer der Plastifizierungseinheit nachgeschalteten Zuführeinheit zum Zuführen von Kautschukmischungen in eine Extrusionseinheit,
d. Zufüttern der in Schritt c. gemessenen schwefelvernetzbaren Kautschukmischung in eine Extrusionseinheit und Extrudieren der zugefütterten Kautschukmischung in der Extrusionseinheit,
und
e. Ermitteln des Ist-Metergewichts einer mittels der Extrusionseinheit extrudierten Kautschukmischung mittels einer Sensoreinheit.

Im Rahmen der vorliegenden Erfindung umfasst der Ausdruck "Plastifizieren einer Kautschukmischung" bevorzugt

- das Senken der Mooney-Viskosität der Kautschukmischung im Vergleich zur Kautschukmischung vor dem Plastifizieren
und/oder
- eine homogene Erhöhung der Mischungstemperatur der Kautschukmischung während des Plastifizierens.

Bevorzugt ist ein erfindungsgemäßes Verfahren wie vorstehend beschrieben oder wie vorstehend als bevorzugt beschrieben, wobei das Verfahren zusätzlich den Schritt f. umfasst:

f. Regeln des Energieeintrags der Plastifizierungseinheit, insbesondere Regeln der Drehzahl eines Zahnrads, einer Walze und/oder einer Extruderschnecke der Plastifizierungseinheit, sodass die gemessene Temperatur der Kautschukmischung in der Zuführeinheit erhöht wird,

oder

f. Regeln des Energieeintrags in die Plastifizierungseinheit während Schritt b. in Abhängigkeit des in Schritt e. ermittelten Ist-Metergewichts der extrudierten Kautschukmischung, bevorzugt sodass die der Extrusionseinheit zugeführte Kautschukmischung eine Temperatur im Bereich von 50 bis 110 °C aufweist.

Bevorzugt ist ein erfindungsgemäßes Verfahren wie vorstehend beschrieben oder wie vorstehend als bevorzugt beschrieben, wobei die in Schritt b. plastifizierte schwefelvernetzbare Kautschukmischung in der Plastifizierungseinheit zumindest teilweise eine Temperatur im Bereich von 20°C bis 150°C aufweist, bevorzugt im Bereich von 40°C bis 110°C, und/oder einen Druck im Bereich von 5 bis 150 bar aufweist, bevorzugt im Bereich von 70 bis 110 bar, besonders bevorzugt im Bereich von 90 bis 105 bar, ganz besonders bevorzugt im Bereich von 93 bis 100 bar.

Ein Vorteil des vorstehend beschriebenen Aspekts der vorliegenden Erfindung ist, dass sich insbesondere bei diesen Drücken und Temperaturen in der Plastifizierungseinheit besonders geringe Variationen des Gewichts oder der Maße der extrudierten Kautschukmischung erreichen lassen.

Bevorzugt ist ein erfindungsgemäßes Verfahren wie vorstehend beschrieben oder wie vorstehend als bevorzugt beschrieben, wobei die in Schritt d. zugefütterte schwefelvernetzbare Kautschukmischung in der Extrusionseinheit zumindest teilweise eine Temperatur im Bereich von 20 °C bis 150 °C aufweist, bevorzugt im Bereich von 40 °C bis 70 °C.

Ein Vorteil des vorstehend beschriebenen Aspekts der vorliegenden Erfindung ist, dass sich insbesondere bei diesen Drücken in der Extrusionseinheit besonders geringe Variationen des Gewichts oder der Maße der extrudierten Kautschukmischung erreichen lassen.

Bevorzugt ist ein erfindungsgemäßes Verfahren wie vorstehend beschrieben oder wie vorstehend als bevorzugt beschrieben, wobei das Plastifizieren in Schritt b. mittels Verwendung mindestens einer Extruderschnecke durchgeführt wird und die Drehzahl der einen oder der mindestens einen Extruderschnecke in Abhängigkeit des Metergewichts und/oder der Metergewichtsschwankungen der mittels der Extrusionseinheit extrudierten Kautschukmischung geregelt wird.

Ein Vorteil des vorstehend beschriebenen Aspekts der vorliegenden Erfindung ist, dass sich insbesondere mittels der Einstellung der Drehzahlen in Schritt b. besonders geringe Variationen des Gewichts oder der Maße der extrudierten Kautschukmischung erreichen lassen.

Bevorzugt ist ein erfindungsgemäßes Verfahren wie vorstehend beschrieben oder wie vorstehend als bevorzugt beschrieben, wobei die Drehzahl der Extruderschnecke der Plastifizierungseinheit in Schritt b. im Bereich von 3 bis 50 U/min liegt.

Ein Vorteil des vorstehend beschriebenen Aspekts der vorliegenden Erfindung ist, dass sich insbesondere bei diesen Drehzahlen in Schritt b. besonders geringe Variationen des Gewichts oder der Maße der extrudierten Kautschukmischung erreichen lassen.

**Figurenbeschreibung:**

Figur 1: Ergebnisse einer Metergewichtsmessung einer gemäß dem Vergleichsbeispiel V1 extrudierten Kautschukmischung über einen Zeitraum von 12 Minuten;

Figur 2: Ergebnisse einer Metergewichtsmessung einer gemäß dem erfindungsgemäßem Beispiel E2 extrudierten Kautschukmischung über einen Zeitraum von 12 Minuten;

Figur 3: Ergebnisse einer Druckmessung einer gemäß dem Vergleichsbeispiel V1 und in der Extrusionseinheit extrudierten Kautschukmischung über einen Zeitraum von 12 Minuten;

Figur 4: Ergebnisse einer Druckmessung einer gemäß dem erfindungsgemäßem Beispiel E2 und in der Extrusionseinheit extrudierten Kautschukmischung über einen Zeitraum von 12 Minuten.

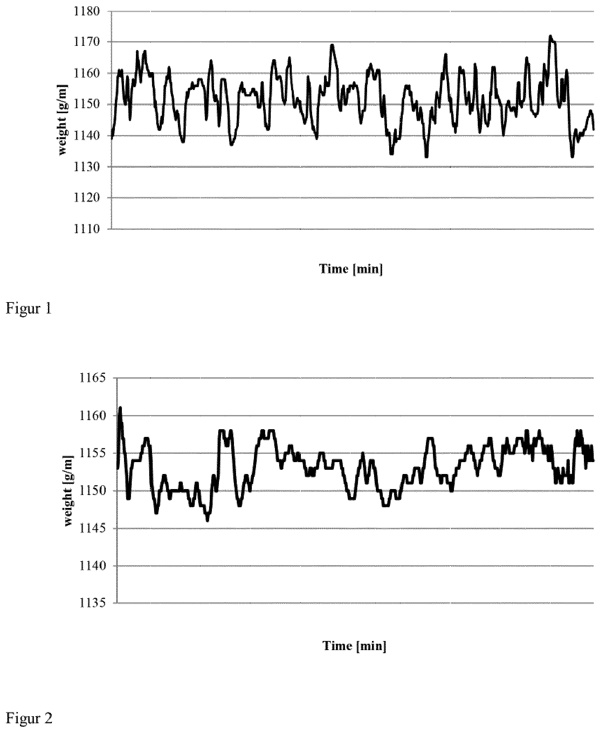

Figur 1 zeigt eine schematische Darstellung der Messergebnisse der Metergewichtswaage während 12 Minuten des Produktionszeitraumes der in Vergleichsbeispiel V1 extrudierten Kautschukmischung. Die statistischen Daten sind $C_m$ 1,4 und $\delta_{Gewicht}$ 11 g/m.

Figur 2 zeigt eine schematische Darstellung der Messergebnisse der Metergewichtswaage während 12 Minuten des Produktionszeitraumes der im erfindungsgemäßen Beispiel E1 extrudierten Kautschukmischung. Die statistischen Daten sind $C_m$ 3,9 und $\delta_{Gewicht}$ 1,3 g/m, wobei kleinere $C_m$ und größere $\delta_{Gewicht}$ eine größere Schwankung im Metergewicht der extrudierten Kautschukmischung anzeigen.

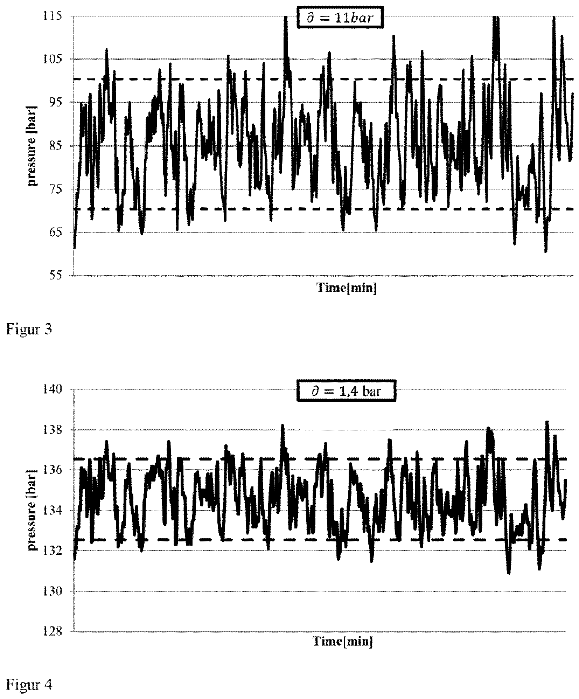

Figur 3 zeigt eine schematische Darstellung der Messergebnisse des Druckes in der Extrudereinheit während 12 Minuten des Produktionszeitraumes der in Vergleichsbeispiel V1 extrudierten Kautschukmischung und es ist gut zu erkennen, dass die Werte bis 115 bar und bis unter 65 bar ausschlagen, wodurch sich ein $\delta_{Druck}$ von 11 bar ergibt.

Figur 4 zeigt eine schematische Darstellung der Messergebnisse des Druckes in der Extrudereinheit während 12 Minuten des der im erfindungsgemäßen Beispiel E1 extrudierten Kautschukmischung und es ist gut zu erkennen, dass die Werte nur bis über 138 bar und bis unter 132 bar ausschlagen, wodurch sich ein deutliches besseres $\ddot{O}_{Druck}$ von 1,4 bar ergibt, wobei größere $\delta_{Druck}$ eine größere Schwankung im Metergewicht der extrudierten Kautschukmischung anzeigen.

**Experimentelle Beispiele:**

Messmethoden:

1. Ermittlung des Metergewichts
Die Ergebnisse wurden mit einer herkömmlichen Metergewichtswaage für Kautschukprofile in Form von Endlos-Streifen oder auf Länge geschnittene Streifen ermittelt.

2. Ermittlung der Parameter
Die Ermittlung der Parameter $C_m$ und $\delta_{Gewicht}$ erfolgten gemäß den folgenden Formeln:

**Variation des Metergewichts:**

$$\delta_{Gewicht} = v_{max} - v_{min}, \qquad \textbf{Formel (1)}$$

wobei

- $v_{max}$ der betragsmäßig höchste Messwert für das Metergewicht ist, welcher innerhalb eines vorbestimmten Zeitintervalls von 20 min gemessen wurde, und
- $v_{min}$ der betragsmäßig kleinste Messwert für das Metergewicht ist, welcher innerhalb eines vorbestimmten Zeitintervalls von 20 min gemessen wurde.

**Machine Capability ($C_m$):**

$$C_m = \frac{USL - LSL}{6s} \qquad \textbf{Formel (2)}$$

wobei:

USL = Upper Specification Limit,
LSL = Lower Specification Limit,
s = Standardabweichung, wobei die Standardabweichung wie folgt berechnet wurde:

$$s = \sqrt{Var(X)} = \sqrt{\frac{\sum_{i=1}^{n}(x_i - \mu)^2}{n}}$$

wobei $x_i$ der $i$-te Messwert; $\mu$ ist der Mittelwert der Messwerte ist und n die Anzahl der Messwerte ist.

**Variation des Druckes im Extruder:**

$$\delta_{Druck} = v_{max} - v_{min}, \qquad \textbf{Formel (3)}$$

wobei

- $v_{max}$ der betragsmäßig höchste Messwert für den Druck ist, welcher innerhalb eines vorbestimmten Zeitintervalls von 20 min gemessen wurde, und
- $v_{min}$ der betragsmäßig kleinste Messwert für den Druck ist, welcher innerhalb eines vorbestimmten Zeitintervalls von 20 min gemessen wurde.

<u>Herstellung:</u>

Tabelle 1: Experimentelle Daten der hergestellten Kautschukmischung

| Bestandteil | Einheit | Mischstufe | Vgl.-Exp. V1 | Exp. E1 | Exp. E2 | Exp. E3 |
|---|---|---|---|---|---|---|
| | | | Nicht erfi.-gemäß | Erfind.-gemäß | Erfind.-gemäß | Erfind.-gemäß |
| NR | phr | 1 | 90 | 90 | 90 | 90 |
| SBR | phr | 1 | 10 | 10 | 10 | 10 |
| Carbon black | phr | 1 | 90 | 90 | 90 | 90 |
| Silica | phr | 1 | 10 | 10 | 10 | 10 |
| Harze | phr | 1 | 6 | 6 | 6 | 6 |
| ZnO | phr | 1 | 2 | 2 | 2 | 2 |
| Stearinsäure | phr | 1 | 1 | 1 | 1 | 1 |
| Weichmacher | phr | 1 | 25 | 25 | 25 | 25 |
| Schwefel | phr | 2 | 2 | 2 | 2 | 2 |
| Vulkanisationsmittel | phr | 2 | 2 | 2 | 2 | 2 |

Die Herstellung der schwefelvernetzbaren Kautschukmischungen erfolgt nach dem in der Kautschukindustrie üblichen Verfahren, bei dem zunächst in zwei Mischstufen eine Grundmischung mit allen Bestandteilen außer dem Vulkanisationssystem (Schwefel und Vulkanisationsmittel) hergestellt wird. Die verwendete Rezeptur der einzelnen Kautschukmischungen ist in Tabelle 1 dargestellt. Durch Zugabe des Vulkanisationssystems in einer zweiten Mischstufe wird die Fertigmischung erzeugt. Die Fertigmischung wird durch die Plastifizierungseinheit und die Zuführeinheit zu einer plastifizierten Kautschukmischung weiterverarbeitet. Während der Plastifizierung wurden die Kautschukmischungen wie in Tabelle 2 angegeben mit unterschiedlichen Drücken und Verweilzeiten behandelt.
Die Plastifizierungseinheit umfasst einen ersten Schneckenextruder mit Düse, wobei der Schneckenextruder eine Extruderschnecke, eine Länge von 900-400 mm und einen inneren Durchmesser von 40 bis 250 mm aufweist.
Die Zuführeinheit ist ein Förderband.

Die Extrusionseinheit umfasst einen zweiten Schneckenextruder mit einer Düse, wobei der Schneckenextruder eine Extruderschnecke, eine Länge von 500-3500 mm und einen inneren Durchmesser von 40 bis 250 mm aufweist. Die Extrusionseinheit wies eine Regeltemperatur im Temperaturbereich von 60 °C bis 110 °C auf, wobei die Regeltemperatur die Temperatur ist, welche die Temperatur im Extruderzylinder um die Extruderschnecke und im Extruderkopf beschreibt. Der Druck in der Extrusionseinheit während der Extrusion und die finale Temperatur am Ende der Extrusionseinheit geben Rückschlüsse über die Viskosität und Verarbeitbarkeit der plastifizierten Kautschukmischung.

Ergebnisse:

Tabelle 1: Experimentelle Daten der erfindungsgemäß und nicht erfindungsgemäß

| | Einheit | Vgl. V1 | Exp. E1 | Exp. E2 | Exp. E3 |
|---|---|---|---|---|---|
| Eigenschaft | | Nicht erfind.-gemäß | Erfind.-gemäß | Erfind.-gemäß | Erfind.-gemäß |
| **Bei Plastifizierung** | | | | | |
| Drehzahl der Extruderschnecke | U/min | --- | 22 | 22 | 22 |
| Druck in der PE | Bar | --- | 84 | 90 | 93 |
| Temperatur der KM bei Austritt aus der Düse | °C | --- | 60 | 75 | 90 |
| Temperatur der KM beim Zuführen in die EE | °C | 21 | 55 | 75 | 90 |
| **Bei der Extrusion** | | | | | |
| Temperatur der KM in der EE | °C | 21 | 108 | 115 | 115 |
| Variation des Druckes $\delta_{Druck}$ | bar | 11 | 1,4 | 1 | 1,4 |
| **Nach der Extrusion** | | | | | |
| Variation Metergewicht $\delta_{Gewicht}$ | g/m | 11 | 1,3 | 0,9 | 0,8 |
| Machine Capability $C_m$ | --- | 1,4 | 3 | 3,9 | 4,1 |
| KM = Kautschukmischung; EE = Extrusionseinheit | | | | | |

Die Tabelle 1 zeigt, dass durch die Vorbehandlung der Mischung durch einen davor geschalteten Schneckenextruder als Beispiel einer Plastifizierungseinheit die Variation im Metergewicht der aus der Extrusionseinheit (d.h. hier zweiten Schneckenextruder) austretenden Kautschukmischung und auch die Variation des Druckes der Kautschukmischung im nachgeschalteten zweiten Schneckenextruder signifikant reduziert werden. Dies lässt sich anhand der $\delta_{Gewicht}$- und $\delta_{Druck}$-Werte und insbesondere anhand der $C_m$-Werte erkennen. Je geringer die Standardabweichung im Metergewicht ist, desto höher wird die Produktstabilität und desto höher ist der errechnet $C_m$-Wert.

Durch den Einsatz einer Klassifizierungseinheit können somit nicht nur das Gewicht und damit auch die Maße der extrudierten Kautschukmischung verbessert werden, sondern zusätzlich auch die Variation des Druckes in der Extrusionseinheit (hier: der zweite Schneckenextruder) verringert werden. Dies ist insbesondere ein Vorteil, dass aufgrund des gleichmäßigeren Druckes auch die Temperaturschwankungen in der Extrusionseinheit verkleinert werden und somit eine bessere Reaktionskontrolle beim Extrudieren erreicht wird. Dies führt zu besseren Materialeigenschaften, insbesondere homogeneren Materialeigenschaften.

**Patentansprüche**

1. Vorrichtung zur Extrusion von schwefelvernetzbaren Kautschukmischungen, umfassend

   - mindestens eine Plastifizierungseinheit zum Plastifizieren der hergestellten schwefelvernetzbaren Kautschukmischungen,
   - mindestens eine der Plastifizierungseinheit nachgeschalteten Zuführeinheit zum Zuführen von Kautschukmischungen in eine Extrusionseinheit,
   - mindestens eine der Zuführeinheit nachgeschalteten Extrusionseinheit
   und
   - mindestens eine Sensoreinheit zum Ermitteln des Ist-Metergewichts einer mittels der Extrusionseinheit extrudierten Kautschukmischung,

   **dadurch gekennzeichnet, dass** die Vorrichtung zusätzlich
   eine Regelungseinheit umfasst, die ausgebildet ist, den Energieeintrag in die Plastifizierungseinheit in Abhängigkeit des Metergewichts und/oder der Metergewichtsschwankungen der mittels der Extrusionseinheit extrudierten Kautschukmischung zu regeln.

2. Vorrichtung nach Anspruch 1, wobei die Extrusionseinheit Messsensoren umfasst, wobei einer oder mehrere der Messsensoren dazu ausgebildet und angeordnet ist, die Temperatur und/oder den Druck der Kautschukmischung in der Plastifizierungseinheit und/oder der Extrusionseinheit zu ermitteln.

3. Vorrichtung nach einem der vorangehenden Ansprüche, wobei die Vorrichtung einen Mischer zum Herstellen von schwefelvernetzbaren Kautschukmischungen aufweist, welcher der Plastifizierungseinheit vorgeschaltet ist.

4. Vorrichtung nach einem der vorangehenden Ansprüche, wobei

   - die Plastifizierungseinheit eine Zahnradpumpe, ein Walzwerk oder ein Extruder mit einer oder mehreren Extruderschnecke aufweist
   und/oder
   - wobei die Zuführeinheit Transportmittel, insbesondere ein oder mehrere Förderbänder, aufweist, wobei die Zuführeinheit bevorzugt aus einem oder mehreren Förderbändern besteht.

5. Vorrichtung nach einem der vorangehenden Ansprüche, wobei die Plastifizierungseinheit ein Extruder mit mindestens einer Extruderschnecke ist und die Regelungseinheit ausgebildet ist, anstelle des Energieeintrages die Drehzahl der einen oder der mindestens einen Extruderschnecke des Extruders in Abhängigkeit des Metergewichts der mittels der Extrusionseinheit extrudierten Kautschukmischung zu regeln.

6. Vorrichtung nach einem der vorangehenden Ansprüche, wobei die Regelungseinheit ferner ausgebildet ist,

   a. die Drehzahl der Schnecken, Zahnräder oder Walzen der Plastifizierungseinheit
   und/oder
   b. der in die Plastifizierungseinheit zugeführten Menge an Kautschukmischung pro Zeiteinheit,
   und/oder
   c. der Zufuhrgeschwindigkeit der Zuführeinheit in die Extrudereinheit,
   in Abhängigkeit des Metergewichts der mittels des Extruders extrudierten Kautschukmischung zu regeln.

7. Verwendung einer Vorrichtung wie in einem der vorangehenden Ansprüche definiert zum Senken der Schwankungen des Metergewichts von extrudierten, schwefelvernetzbaren Kautschukmischungen.

8. Verfahren zum Herstellen einer extrudierten, schwefelvernetzbaren Kautschukmischung, umfassend die folgenden Verfahrensschritte:

   a. Herstellen einer schwefelvernetzbaren Kautschukmischung mittels eines Mischers oder Bereitstellen einer schwefelvernetzbaren Kautschukmischung,

b. Plastifizieren der in Schritt a. hergestellten oder bereitgestellten schwefelvernetzbaren Kautschukmischung in einer Plastifizierungseinheit,

c. Messen der Temperatur der Kautschukmischung in einer der Plastifizierungseinheit nachgeschalteten Zuführeinheit zum Zuführen von Kautschukmischungen in eine Extrusionseinheit,

d. Zufüttern der in Schritt c. gemessenen schwefelvernetzbaren Kautschukmischung in eine Extrusionseinheit und Extrudieren der zugefütterten Kautschukmischung in der Extrusionseinheit,

und

e. Ermitteln des Ist-Metergewichts einer mittels der Extrusionseinheit extrudierten Kautschukmischung mittels einer Sensoreinheit.

9. Verfahren nach Anspruch 8, wobei das Verfahren zusätzlich den Schritt f. umfasst:

f. Regeln des Energieeintrags der Plastifizierungseinheit, insbesondere Regeln der Drehzahl eines Zahnrads, einer Walze und/oder einer Extruderschnecke der Plastifizierungseinheit, sodass die gemessene Temperatur der Kautschukmischung in der Zuführeinheit erhöht wird,

oder

f. Regeln des Energieeintrags in die Plastifizierungseinheit während Schritt b. in Abhängigkeit des in Schritt e. ermittelten Ist-Metergewichts der extrudierten Kautschukmischung.

10. Verfahren nach einem der Ansprüche 8 bis 9, wobei die in Schritt b. plastifizierte schwefelvernetzbare Kautschukmischung in der Plastifizierungseinheit zumindest teilweise eine Temperatur im Bereich von 20°C bis 150°C aufweist, bevorzugt im Bereich von 40°C bis 110°C, und/oder einen Druck im Bereich von 5 bis 150 bar aufweist, bevorzugt im Bereich von 70 bis 110 bar, besonders bevorzugt im Bereich von 90 bis 105 bar, ganz besonders bevorzugt im Bereich von 93 bis 100 bar.

11. Verfahren nach einem der Ansprüche 8 bis 10, wobei die in Schritt d. zugefütterte schwefelvernetzbare Kautschukmischung in der Extrusionseinheit zumindest teilweise eine Temperatur im Bereich von 20 °C bis 150 °C aufweist, bevorzugt im Bereich von 40 °C bis 70 °C.

12. Verfahren nach einem der Ansprüche 8 bis 11, wobei das Plastifizieren in Schritt b. mittels Verwendung mindestens einer Extruderschnecke durchgeführt wird und die Drehzahl der einen oder der mindestens einen Extruderschnecke in Abhängigkeit des Metergewichts der mittels der Extrusionseinheit extrudierten Kautschukmischung geregelt wird.

13. Verfahren nach Anspruch 12, wobei die Drehzahl der Extruderschnecke der Plastifizierungseinheit in Schritt b. im Bereich von 3 bis 50 U/min liegt.

Figur 1

Figur 2

Figur 3

Figur 4

Europäisches
Patentamt

European
Patent Office

Office européen
des brevets

**EUROPÄISCHER RECHERCHENBERICHT**

Nummer der Anmeldung

EP 20 16 3468

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 196 35 706 A1 (LIMPER ANDREAS PROF DR [DE]) 5. März 1998 (1998-03-05) | 8-11 | INV. B29C48/285 |
| A | * Abbildung 1 *<br>* Ansprüche 1-4 *<br>* Spalte 2, Zeilen 37-41 * | 1-7,12, 13 | B29C48/375<br>B29C48/92<br>B29B7/42<br>B29B7/72 |
| Y | DE 100 14 507 A1 (KRUPP ELASTOMERTECHNIK GMBH [DE]) 27. September 2001 (2001-09-27) | 8-11 | B29B7/74 |
| A | * Absätze [0026] - [0029] *<br>* Anspruch 1 *<br>* Seite 1 * | 1-7,12, 13 | |
| A | DE 195 07 598 A1 (UNIROYAL ENGLEBERT GMBH [DE]) 12. September 1996 (1996-09-12)<br>* Anspruch 8 *<br>* Abbildung 1 * | 1-13 | |

RECHERCHIERTE SACHGEBIETE (IPC)

B29C
B29K
B29B

Der vorliegende Recherchenbericht wurde für alle Patentansprüche erstellt

| Recherchenort | Abschlußdatum der Recherche | Prüfer |
|---|---|---|
| München | 27. August 2020 | Koning, Erik |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 20 16 3468

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-08-2020

| Im Recherchenbericht angeführtes Patentdokument | Datum der Veröffentlichung | Mitglied(er) der Patentfamilie | | Datum der Veröffentlichung |
|---|---|---|---|---|
| DE 19635706 A1 | 05-03-1998 | KEINE | | |
| DE 10014507 A1 | 27-09-2001 | KEINE | | |
| DE 19507598 A1 | 12-09-1996 | AT | 242103 T | 15-06-2003 |
| | | CA | 2170817 A1 | 05-09-1996 |
| | | DE | 19507598 A1 | 12-09-1996 |
| | | EP | 0733457 A1 | 25-09-1996 |
| | | HU | 9600524 A1 | 29-06-1998 |
| | | JP | H08252858 A | 01-10-1996 |
| | | KR | 960033704 A | 22-10-1996 |
| | | PL | 313069 A1 | 16-09-1996 |
| | | PT | 733457 E | 31-10-2003 |
| | | US | 5843349 A | 01-12-1998 |
| | | ZA | 961469 B | 28-08-1996 |

EPO FORM P0461

Für nähere Einzelheiten zu diesem Anhang : siehe Amtsblatt des Europäischen Patentamts, Nr.12/82